# EUROPEAN PATENT SPECIFICATION

(11) **EP 3 299 182 B1**
(45) Date of publication and mention of the grant of the patent: **09.09.2020**
(21) Application number: 17192774.2
(22) Date of filing: 22.09.2017
(51) Int. Cl.: B60C 11/00, B60C 11/01, B60C 9/28, B60C 15/06

(54) **HEAVY DUTY TIRE**
SCHWERLASTREIFEN
PNEU POUR FONCTIONNEMENT INTENSIF

(30) Priority: 25.09.2016 US 201662399449 P
(43) Date of publication of application: 28.03.2018
(73) Proprietor: The Goodyear Tire & Rubber Company, Akron, OH 44316 (US)
(72) Inventor: WILSON, John David, Clinton, Ohio 44216 (US); SCHESSLER, Gregory Alan, Stow, Ohio 44224 (US); SPENCER, Todd James, Hartville, Ohio 44632 (US); HUBBELL, David Ray, Hartville, Ohio 44632 (US)
(74) Representative: Kutsch, Bernd

(56) References cited:
- EP-A1- 1 484 196
- EP-A1- 1 629 952
- EP-A2- 2 322 360
- JP-A- H11 278 014
- JP-A- 2003 136 911
- JP-A- 2010 274 790
- US-A- 5 553 646
- US-B1- 6 866 734

## Description

### Field of the Invention

The present invention relates to pneumatic tires, and more particularly to very large, wide base tires for use for example, on construction vehicles such as earth movers, and rigid haul dump trucks.

### Background of the Invention

In very large tires having a diameter of 80 inches or more (2032 mm or more), tire operating conditions can be severe because of the extreme tire loading and off-road conditions. Furthermore, the speed of the vehicles may be high, which can result in excessive heat buildup in the tire. When a very large off the road tire is used in the oil sands environment, the tires are subjected to extreme dynamic and static loads. During vehicle operation, the tire may bounce through the thick, viscous sand conditions. The tire conditions result in the tire bouncing and deflecting, which can result in the tire failing earlier that its predicted life due to heat, high strain and bead failure. Thus, it is desired to have an improved tire which is a cooler running tire.

### Definitions

"Axial" and "axially" means the lines or directions that are parallel to the axis of rotation of the tire.
"Bead" or "Bead Core" means generally that part of the tire comprising an annular tensile member, the radially inner beads are associated with holding the tire to the rim being wrapped by ply cords and shaped, with or without other reinforcement elements such as flippers, chippers, apexes or fillers, toe guards and chafers.
"Belt Structure" or "Reinforcing Belts" means at least two annular layers or plies of parallel cords, woven or unwoven, underlying the tread, unanchored to the bead, and preferably having both left and right cord angles, preferably in the range from 7º to 36º with respect to the equatorial plane of the tire.
"Carcass" means a laminate of tire ply material and other tire components cut to length suitable for splicing, or already spliced, into a cylindrical or toroidal shape. Additional components may be added to the carcass prior to its being vulcanized to create the molded tire.
"Circumferential" means lines or directions extending along the perimeter of the surface of the annular tread perpendicular to the axial direction; it can also refer to the direction of the sets of adjacent circular curves whose radii define the axial curvature of the tread as viewed in cross section.
"Radial" and "radially" mean directions radially toward or away from the axis of rotation of the tire.

EP-A-1 629 952 describes a heavy-duty tire comprising a carcass and tread located radially outward of the carcass. The carcass comprises sidewalls which terminate in a bead area. The tire has a tire width of 1158 mm and a tread width of 1045 mm.

JP-A-2000-274790 describes a heavy-duty tire comprising a carcass and a tread wherein the tire is mounted on a rim having rim width of 1117.6 mm.

### Summary of the Invention

The invention relates to a tire in accordance with claim 1.

Dependent claims refer to preferred embodiments of the invention.

One or more embodiments of the present invention provide a heavy-duty tire comprising a carcass, a tread located radially outward of the carcass, the carcass further comprising sidewalls which terminate in bead area, wherein said tire has a molded base width in the range of from 1117.6 mm to 1270 mm and wherein the shoulder drop ranges from 64 mm to 120 mm, preferably 80 mm to 100 mm such as 90 mm.

Preferably, the molded base width is in the range of from 1117.6 mm to 1168.4 mm such as 1149.35 mm.

In a preferred aspect of the invention, tire has a shoulder wedge and wherein the gauge of the shoulder wedge ranges from 70 mm to 89 mm, preferably from 75 mm to 85 mm such as 80 mm.

In a preferred aspect of the invention, the tire comprises four belts under the tread, wherein the width of the fourth belt ranges from 744 mm to 780 mm, preferably from 760 mm to 770 mm such as 769 mm.

In a preferred aspect of the invention, the tire comprises four belts under the tread wherein the width of the fourth belt is in a range of from 55 % to 65% of the tread arc width, the tread arc width being preferably in a range of from 1200 mm to 1340 mm or from 1250 mm to 1290 mm such as 1270 mm.

In a preferred aspect of the invention, the tire comprises a turn up pad.

In a preferred aspect of the invention, the gauge of the turn up pad is in the range of from 35 mm to 46 mm, and preferably from 38 mm to 43 mm such as 41.5 mm.

In a preferred aspect of the invention, the tread is a multi radius tread.

In a preferred aspect of the invention, the tread is a multi radius tread having at least three different radii, wherein a first radius R1 ranges from 2200 to 2500 mm, a second radius R2 is less than R1 and is preferably in a range of from 1600 to 2100 mm, and wherein a third radius R3 is preferably in a range of from 1000 to 1500 mm.

### Brief Description of the Drawings

The invention will be described by way of example and with reference to the accompanying drawings in which:
Figure 1 illustrates a first embodiment of a tire 10 of the present invention.
Figure 2a illustrates a cross-sectional view of a control tire and Figure 2b illustrates a cross-sectional view of the tire of the present invention.
Figure 3 illustrates the cross-sectional view of the cross-sectional profile of the tire of the present invention, while the control tire profile is shown in phantom.
Figure 4 illustrates the cross-sectional view of the shoulder portion of the tire of the present invention, while the control tire shoulder portion is shown in phantom.
Figure 5A illustrates a front view of the tread portion of the control tire, while Figure 5B illustrated a front view of the tread portion of the tire of the present invention.
Figure 6A illustrates a front view of the shoulder portion and footprint of the control tire, while Figure 6B illustrated a front view of the shoulder portion and footprint of the tire of the present invention.
Figure 7A illustrates a cross-sectional view of the shoulder portion of the control tire, while Figure 7B illustrates a cross-sectional view of the shoulder portion of the tire of the present invention.
Figure 8A illustrates a cross-sectional view of the lower sidewall gauge of the control tire, while Figure 8B illustrates a cross-sectional view of the lower sidewall gauge of the tire of the present invention.

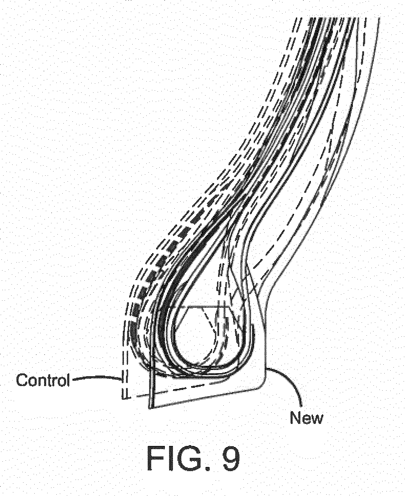

Figure 9 illustrates the cross-sectional view of the cross-sectional profile of the bead area and lower sidewall of the tire of the present invention, while the control tire profile is shown in phantom.
Figure 10A illustrates the cross-sectional view of a heat map of the control tire at 120% rated load, while Figure 10B illustrates a cross-sectional view of a heat map of the tire of the present invention, at the same conditions.
Fig. 11A illustrates the cross-sectional view of the bead and flange area of the control tire at 120% load, while Fig. 11B illustrates the cross-sectional view of the bead and flange area of the tire of the present invention at 120% load.
Figure 12A illustrates a footprint pressure map of the control tire at 120% rated load, while Figure 12B illustrates a footprint pressure map of the tire of the present invention, at the same conditions.
Fig. 13 illustrates a footprint pressure map of the control tire and tire of the present invention at an unloaded condition, a 100% rated load condition, and 120% rated load condition.

### Detailed Description of Example Embodiments of the Invention

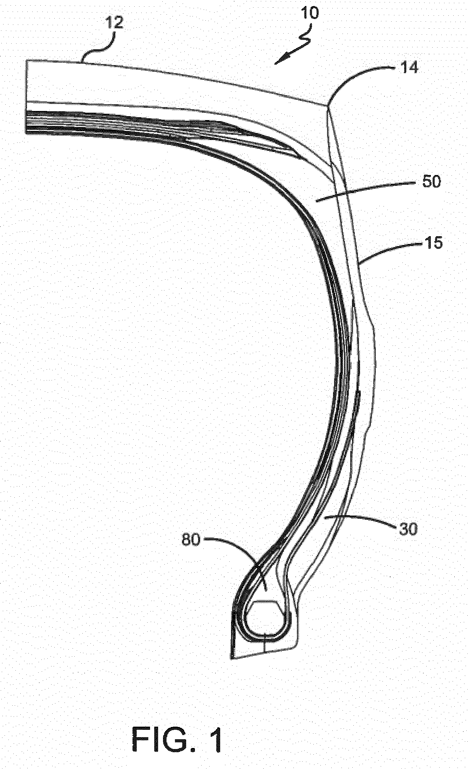

Figure 1 illustrates a first embodiment of a tire 10 of the present invention. The tire preferably has a nominal rim diameter of 35 inches or more. The tire 10 has an outer ground engaging tread portion 12 which has axially outer lateral edges 14. Sidewalls 15 extend radially inward from the tread lateral edges 13, 14 and terminate in a pair of bead regions 16 having an annular bead core 20. The tire 10 is further provided with a carcass which has a reinforcing ply structure 18 which extends from bead region to bead region. The tire may further include breakers 22 and other tire components known to those skilled in the art.

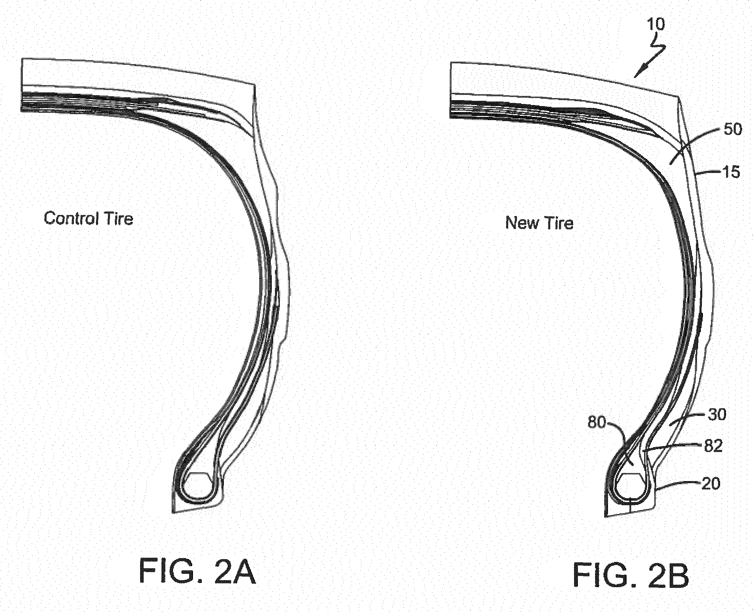

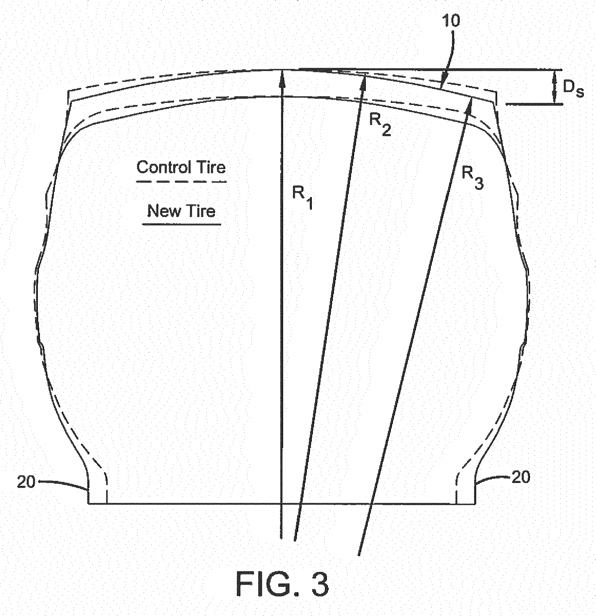

Figure 2a illustrates a control tire and Figure 2b illustrates the tire of the present invention. Figure 3 illustrates the mold profile of the control tire and the mold profile tire of the present invention. As shown in Figure 3, the tire 10 of the present invention has a wider molded base width, so that the bead areas 20 are spaced farther apart.

Preferably, the molded base width is in the range of from 44 to 50 inches (1117.6 mm to 1270 mm), more preferably in the range of from 44-49 inches or from 44 to 46 inches such as 45.25 inch (1149.35 mm).

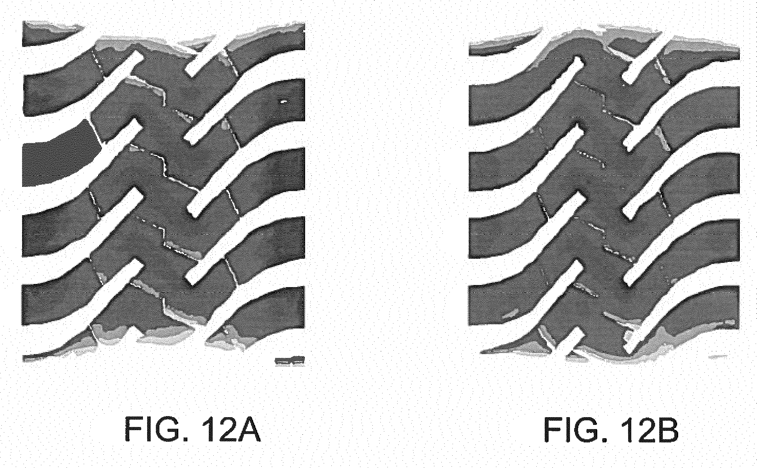

The increase of the molded base width results in an increased section width. Preferably, the molded base width is wider than the rim width. The increased molded base width results in a more stable tire, and increased section width that has lower rolling resistance. The increased molded base width also results in a crown of the tire that has increased load bearing resulting in a more rounded footprint, as shown in Figure 12, with reduced pressure in the shoulders.

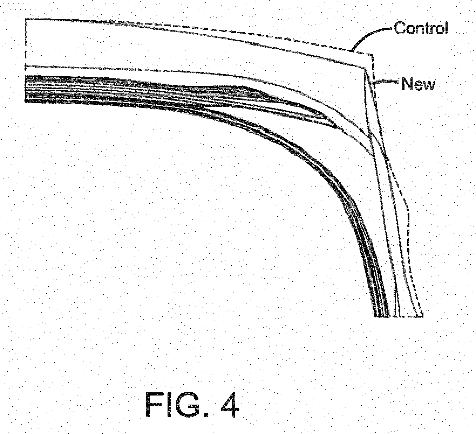

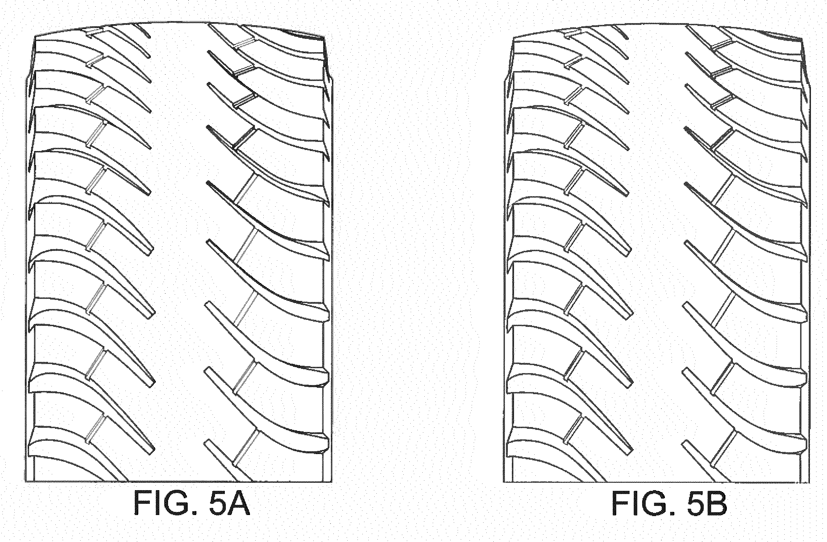

As shown in Figures 3 and 4, the shoulder drop, i.e. the radial difference between the crown outermost radial dimension and the radial dimension at the axially outermost tire shoulder edge, has been increased as compared to the control tire. Preferably, the shoulder drop D ranges from 64 mm to 120 mm, and more preferably in the range of from 85 mm to 115 mm, and more preferably 93 mm to 97 mmsuch as 90 mm. As shown in Figure 5b as compared to the control tire in Figure 5a, the tread profile has more rounded edges. As shown in Figure 3, the tread has a multi radius tread, R1 in the center, R3 at the shoulder, and R2 therebetween. In this example, R1 is 2325 mm, R2 is 1800 mm, and R3 is 1400 mm. R1 preferably ranges from 2200-2500 mm, R2 is less than R1, R2 preferably ranges from 1600-2100 mm, and R3 preferably ranges from 1000-1500 mm.

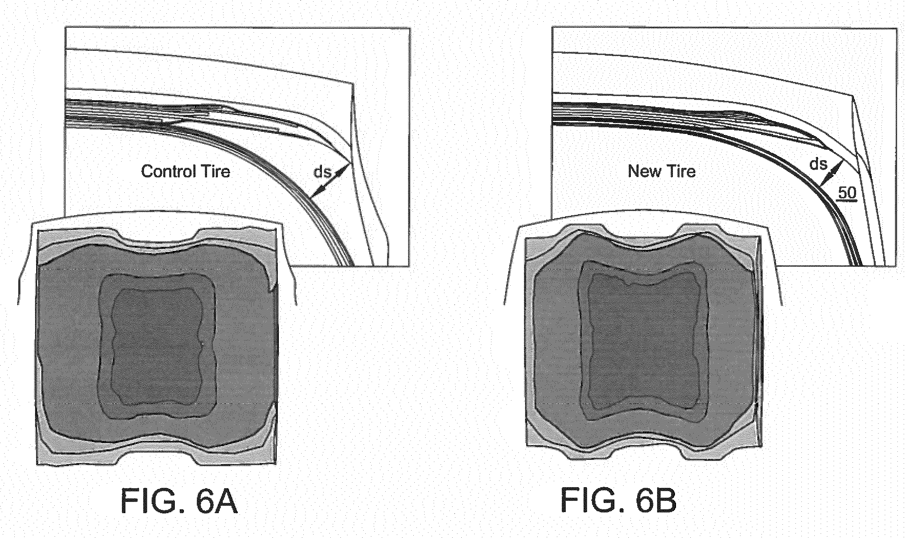

The tire of the present invention also has a reduced shoulder wedge 50. The shoulder wedge gauge ds is preferably in the range of from 70 mm to 89 mm, and more preferably in the range of from 75 mm to 85 mm. The reduction in shoulder wedge gauge results in lower rolling resistance, reduced heat due to the reduced mass, and a rounder footprint as shown in Figure 6B, as compared to the control tire footprint shown in Figure 6A. The reduced upper wedge gauge allows the shoulder region of the footprint to round out.

Preferably, the tire of the present invention also has a thinner turn up pad 30 as compared to the control tire. The gauge of the turn up pad is preferably in the range of from 35 mm to 46 mm, and more preferably in the range of from 38 mm 43 mm.

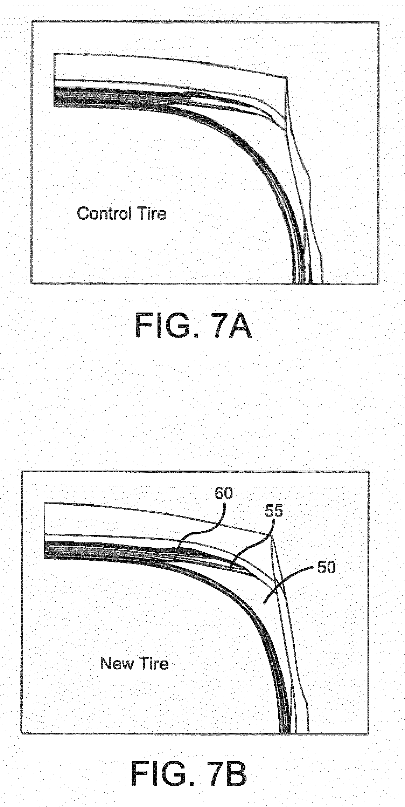

As shown in Figure 7B, the tire of the present invention also has wider belts as compared to the control tire as shown in Figure 7A. In particular, the third radially outer belt 55 is wider than the control tire's third belt. Furthermore, the fourth radially outer belt 60 is also wider than the control tire's fourth belt. Preferably, the width of the fourth belt ranges from 744 mm to 780 mm, and more preferably from 760 mm to 770 mm. Preferably, the fourth belt width is 55 to 65% of the tread arc width. The wider belts result in lower rolling resistance, reduced shoulder length, less deflection, less heat and a more evenly distributed footprint, based upon FEA analysis. The wider belt widths also result in an increased lateral spring rate.

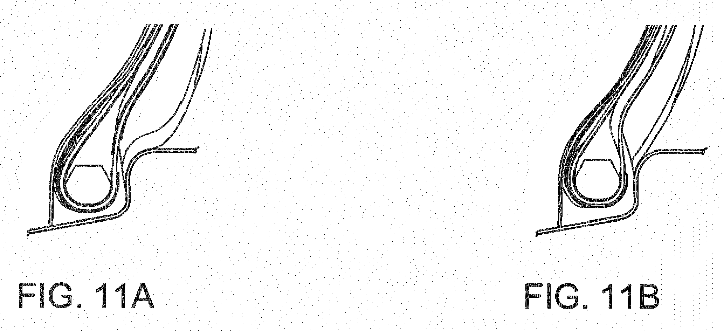

As shown in Figure 2b vs. 2a, the bead apex 80 has a reduced radial height. The bead apex 80 height is preferably in the range of from 160 mm to 260 mm, more preferably from 170 to 200 mm, and more preferably in the range of from 175 to 195 mm. The apex is also preferably made of two compounds, and has a more curved axially outer face 82. As shown in Figure 11, the reduced height of the apex results in less deflection in the bead area over the flange under load.

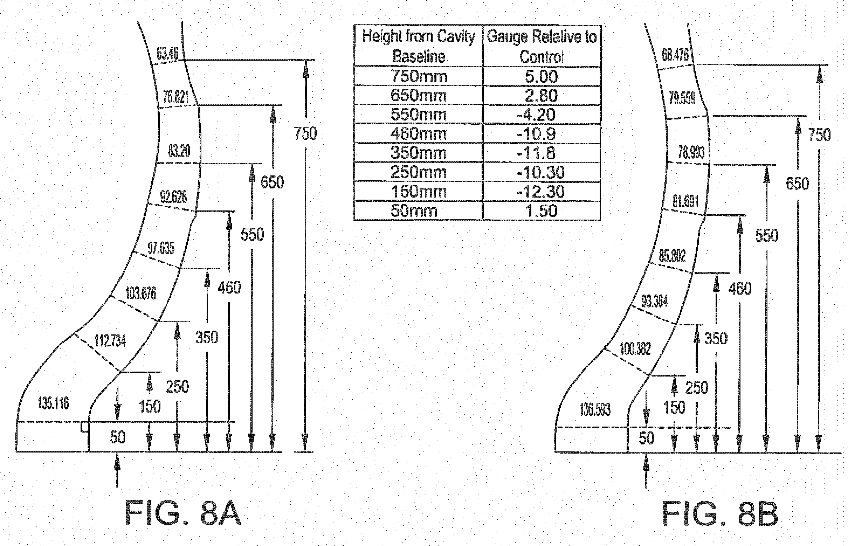

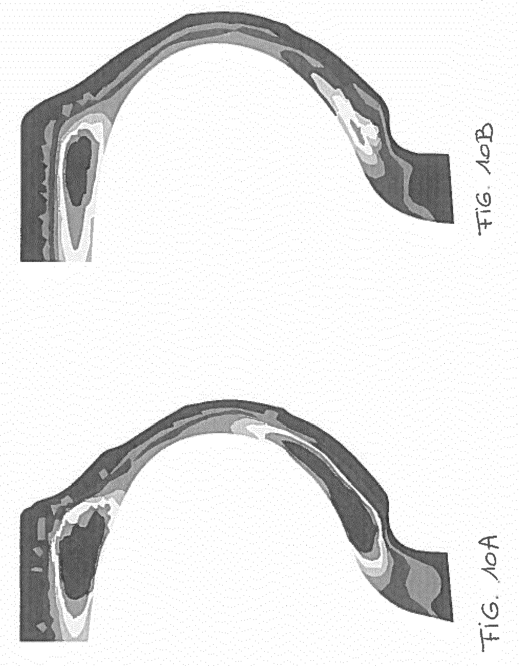

In order to reduce the strain in the lower sidewall of the tire, the gauge of the sidewall has been reduced. See Figure 8 which illustrates the lower sidewall gauge of the tire. As shown in Figure 8, the tire sidewall gauge is substantially reduced in the 150 mm to the 460 mm height from cavity baseline. The reduced gauge of the tire sidewall reduces the heat load, as shown in Figures 10B as compared to the control tire of Figure 10A. The max temperature in the belt edge dropped by 5 degrees C, while the lower sidewall temperature dropped by 10 degrees C.

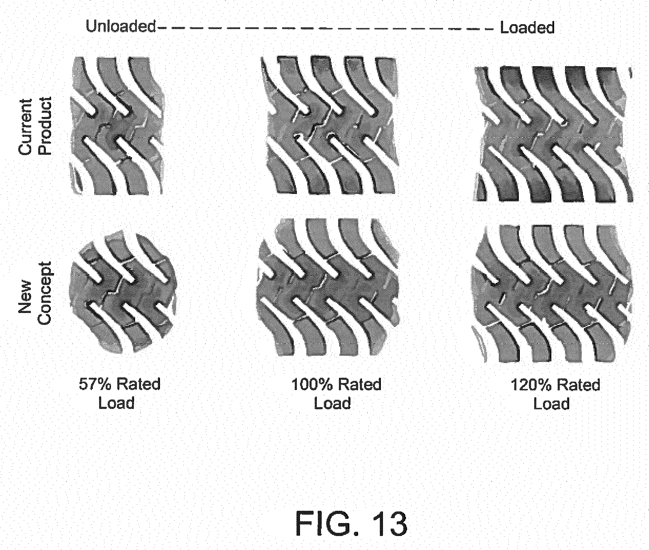

The tire of the present invention results in a lower rolling resistance tire, with less heat generation and a more rounder footprint, as shown in Figures 10-13.

## Claims

1. A heavy-duty tire comprising a carcass and a tread (12) located radially outward of the carcass, the carcass comprising sidewalls (15) which terminate in a bead area, wherein the tire (10) has a molded base width in the range of from 1117.6 mm to 1270 mm and a shoulder drop in a range of from 64 mm to 120 mm.

2. The tire of claim 1 wherein the molded base width is in the range of from 1117.6 mm to 1168.4 mm such as 1149.35 mm.

3. The heavy-duty tire of claim 1 or 2 wherein the tire has a shoulder drop in a range of from 80 mm to 100 mm such as 90 mm.

4. The heavy-duty tire of at least one of the previous claims wherein the tire (10) comprises four belts and wherein the width of the fourth belt (60) is in a range of from 55 % to 65% of the tread arc width, the tread arc width being preferably in a range of from 1200 mm to 1340 mm or from 1250 mm to 1290 mm such as 1270 mm.

5. The heavy-duty tire of at least one of the previous claims wherein the tire (10) comprises four belts and wherein the width of the fourth belt (60) ranges from 744 mm to 780 mm, preferably from 760 mm to 770 mm such as 769 mm.

6. The heavy-duty tire of at least one of the previous claims wherein the tire (10) comprises a turn up pad (30).

7. The heavy-duty tire of at least one of the previous claims wherein the tire has a multi radius tread.

8. The heavy-duty tire of at least one of the previous claims wherein the tread (12) has a multi radius tread having at least three different radii, wherein a first radius (R1) ranges from 2200 to 2500 mm, a second radius (R2) is less than the first radisu (R1) and is preferably in a range of from 1600 to 2100 mm, and wherein a third radius (R3) is preferably in a range of from 1000 to 1500 mm.

## Patentansprüche

1. Reifen für hohe Beanspruchung, der eine Karkasse und eine Lauffläche (12) umfasst, die sich radial außerhalb der Karkasse befindet, wobei die Karkasse Seitenwände (15) umfasst, die in einem Wulstbereich enden, wobei der Reifen (10) eine geformte Basisbreite in dem Bereich von 1117,6 mm bis 1270 mm und einen Schulterabfall in einem Bereich von 64 mm bis 120 mm aufweist.

2. Reifen nach Anspruch 1, wobei die geformte Basisbreite in dem Bereich von 1117,6 mm bis 1168,4 mm, wie etwa 1149,35 mm, liegt.

3. Reifen für hohe Beanspruchung nach Anspruch 1 oder 2, wobei der Reifen einen Schulterabfall in einem Bereich von 80 mm bis 100 mm, wie etwa 90 mm, aufweist.

4. Reifen für hohe Beanspruchung nach wenigstens einem der vorhergehenden Ansprüche, wobei der Reifen (10) vier Gürtel umfasst und wobei die Breite des vierten Gürtels (60) in einem Bereich von 55 % bis 65 % der Laufflächenbogenbreite liegt, wobei die Laufflächenbogenbreite vorzugsweise in einem Bereich von 1200 mm bis 1340 mm oder von 1250 mm bis 1290 mm, wie etwa 1270 mm, liegt.

5. Reifen für hohe Beanspruchung nach wenigstens einem der vorhergehenden Ansprüche, wobei der Reifen (10) vier Gürtel umfasst und wobei die Breite des vierten Gürtels (60) von 744 mm bis 780 mm, vorzugsweise von 760 mm bis 770 mm, wie etwa 769 mm, reicht.

6. Reifen für hohe Beanspruchung nach wenigstens einem der vorhergehenden Ansprüche, wobei der Reifen (10) eine Umschlagsauflage (30) umfasst.

7. Reifen für hohe Beanspruchung nach wenigstens einem der vorhergehenden Ansprüche, wobei der Reifen eine Multi-Radien-Lauffläche aufweist.

8. Reifen für hohe Beanspruchung nach wenigstens einem der vorhergehenden Ansprüche, wobei die Lauffläche (12) eine Multi-Radien-Lauffläche aufweist, die wenigstens drei verschiedenen Radien aufweist, wobei ein erster Radius (R1) von 2200 bis 2500 mm reicht, ein zweiter Radius (R2) kleiner als der erste Radius (R1) ist, und vorzugsweise in einem Bereich von 1600 bis zu 2100 mm liegt, und wobei ein dritter Radius (R3) vorzugsweise in einem Bereich von 1000 bis zu 1500 mm liegt.

## Revendications

1. Bandage pneumatique pour poids-lourds qui comprend une carcasse et une bande de roulement (12) disposée en direction radiale à l'extérieur de la carcasse, la carcasse comprenant des flancs (15) qui se terminent dans une zone qui fait office de talon ; dans lequel le bandage pneumatique (10) possède une largeur de base à l'état moulé qui se situe dans la plage de 1117,6 mm à 1270 mm et une diminution au niveau de l'épaulement dans une plage de 64 mm à 120 mm.

2. Bandage pneumatique selon la revendication 1, dans lequel la largeur de base à l'état moulé se situe dans la plage de 1117,6 mm à 1168,4 mm, par exemple à 1149,35 mm.

3. Bandage pneumatique pour poids-lourds selon la revendication 1 ou 2, dans lequel le bandage pneumatique possède une diminution au niveau de l'épaulement dans une plage de 80 mm à 100 mm, par exemple de 90 mm.

4. Bandage pneumatique pour poids-lourds selon au moins une des revendications précédentes, dans lequel le bandage pneumatique (10) comprend quatre ceintures; et dans lequel la largeur de la quatrième ceinture (60) se situe dans une plage qui représente de 55 % à 65 % de la largeur d'arc de la bande de roulement, la largeur d'arc de la bande de roulement se situant de préférence dans une plage de 1200 mm à 1340 mm ou de 1250 mm à 1290 mm, par exemple s'élevant à 1270 mm.

5. Bandage pneumatique pour poids-lourds selon au moins une des revendications précédentes, dans lequel le bandage pneumatique (10) comprend quatre ceintures; et dans lequel la largeur de la quatrième ceinture (60) se situe dans une plage de 744 mm à 780 mm, de préférence de 760 mm à 770 mm, par exemple s'élève à 769 mm.

6. Bandage pneumatique pour poids-lourds selon au moins une des revendications précédentes, dans lequel le bandage pneumatique (10) comprend une languette de retournement vers le haut (30).

7. Bandage pneumatique pour poids-lourds selon au moins une des revendications précédentes, dans lequel le bandage pneumatique possède une bande de roulement du type à rayons multiples.

8. Bandage pneumatique pour poids-lourds selon au moins une des revendications précédentes, dans lequel la bande de roulement (12) représente une bande de roulement du type à rayons multiples qui possède au moins trois rayons différents ; dans lequel un premier rayon (R) se situe dans la plage de 2200 à 2500 mm, un deuxième rayon (R2) est inférieur au premier rayon (R1) et se situe de préférence dans une plage de 1600 à 2100 mm, et dans lequel un troisième rayon (R3) se situe de préférence dans une plage de 1000 à 1500 mm.
